# EUROPEAN PATENT SPECIFICATION

(11) **EP 3 535 996 B1**
(45) Date of publication and mention of the grant of the patent: **23.12.2020**
(21) Application number: 17808244.2
(22) Date of filing: 06.11.2017
(51) Int. Cl.: H04W 76/22, H04W 48/00, H04W 28/08, H04W 8/12, H04W 8/08

(54) **APPARATUS AND MACHINE READABLE STORAGE MEDIUM FOR HANDLING STICKINESS OF UE-SPECIFIC RAN-CN ASSOCIATION**
VORRICHTUNG UND MASCHINENLESBARES SPEICHERMEDIUM ZUR HANDHABUNG VON KLEBRIGKEIT BEI EINER BENUTZERGERÄTESPEZIFISCHEN RAN-CN-ASSOZIATION
APPAREIL ET SUPPORT DE STOCKAGE LISIBLE PAR MACHINE POUR GÉRER L'ADHÉSIVITÉ D'UNE ASSOCIATION RAN-CN SPÉCIFIQUE À UN ÉQUIPEMENT UTILISATEUR

(30) Priority: 07.11.2016 US 201662418492 P; 09.01.2017 US 201762444243 P
(43) Date of publication of application: 11.09.2019
(73) Proprietor: Apple Inc., Cupertino, CA 95014 (US)
(72) Inventor: STOJANOVSKI, Alexandre Saso, 75020 Paris (FR); HIREMATH, Chetan D., Portland, Oregon 97229 (US); SIROTKIN, Alexander, 49527 Petach Tikva (IL)
(74) Representative: Lang, Johannes
(86) International application number: PCT/US2017/060231
(87) International publication number: WO 2018/085784

(56) References cited:
- US-A1- 2016 100 330
- US-A1- 2016 269 297
- KDDI ET AL: "Key issue: Core Network load re-balancing", 3GPP DRAFT; S2-160954_NEXGEN_KI_REBALANCE-V6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, FRANCE; 20160223 - 20160226 18 February 2016 (2016-02-18), XP051072749, Retrieved from the Internet: URL:http://www.3gpp.org/ftp/tsg_sa/WG2_Arc h/TSGS2_113AH_Sophia_Antipolis/Docs/ [retrieved on 2016-02-18]
- INTEL: "Solution aspects for Key Issue #19", 3GPP DRAFT; S2-164726_SOLUTION_KEYISSUE_19_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya; 20160829 - 20160902 27 August 2016 (2016-08-27), XP051130665, Retrieved from the Internet: URL:http://www.3gpp.org/ftp/Meetings_3GPP_ SYNC/SA2/Docs/ [retrieved on 2016-08-27]
- VODAFONE ET AL: "Key Issue #19: EPC/NGCN updates for "virtualisation"", 3GPP DRAFT; S2-166264 REV 6132 REV 5884 EPC-NGCN CHANGES FOR VIRTUALISATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. SA WG2, no. Kaohsiung City, Taiwan; 20161017 - 20161021 24 October 2016 (2016-10-24), XP051170185, Retrieved from the Internet: URL:http://www.3gpp.org/ftp/tsg_sa/WG2_Arc h/TSGS2_117_Kaohsiung_City/Docs/ [retrieved on 2016-10-24]

## Description

### Related Applications

This application claims the benefit of United States provisional patent Application No. 62/418,492, filed November 7, 2016, and United States provisional patent Application No. 62/444,243, filed January 9, 2017.

### Technical Field

Various embodiments may relate to the field of wireless communication systems including user equipment (UE), radio access networks (RANs), and core networks (CNs). Specifically, this disclosure is directed to handling UE-specific RAN-CN associations.

### Background

Wireless mobile communication technology uses various standards and protocols to transmit data between a base station and a wireless mobile device. Wireless communication system standards and protocols can include the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as an Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE). In fifth generation (5G) wireless networks, also referred to herein as next generation or NextGen systems, an access network (AN) may be referred to herein as a 5G AN or NextGen RAN (NG RAN). A 5G AN or NextGen RAN can include a 5G Node (gNB, new radio node B (NR NB), or simply AN node). As used herein a core network in 5G system may be referred to as a 5G core or NextGen core (NGC).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN implements GSM and/or EDGE RAT, the UTRAN implements universal mobile telecommunication system (UMTS) RAT or other 3GPP RAT, and the E-UTRAN implements LTE RAT.

A core network can be connected to the UE through the RAN Node. The core network can include a serving gateway (SGW), a packet data network (PDN) gateway (PGW), an access network detection and selection function (ANDSF) server, an enhanced packet data gateway (ePDG) and/or a mobility management entity (MME).

The following 3GPP documents are directed to the Key Issue "Core Network load re-balancing": S2-160954 (XP051072749), S2-164726 (XP051130665) and S2-166264 (XP051170185). Both US 2016/0100330 A1 and US 2016/0269297 A1 teach mechanisms for core network load balancing using virtualization.

### Summary of the invention

In a first aspect, the present invention provides an apparatus as defined by independent claim 1. In a second aspect, the present invention provides a machine readable storage medium as defined by independent claim 10.

### Brief Description of the Drawings

FIG. 1 is a block diagram illustrating a 5G system architecture configured according to certain embodiments.
FIG. 2 is a flow diagram illustrating a procedure for handling of stickiness or persistence of UE-specific associations on a RAN-CN interface according to certain embodiments.
FIG. 3 is a flow diagram illustrating a procedure for handling of stickiness or persistence of UE-specific associations on an interface between a user plane function and a serving CN control plane function according to certain embodiments.
FIG. 4 is a block diagram of a RAN configured to communicate with a plurality of network functions in one or more data centers according to certain embodiments.
FIG. 5 is a flow diagram illustrating a procedure for handling of stickiness or persistence of UE-specific associations on a RAN-CN interface using a load balancer according to certain embodiments.
FIG. 6 illustrates example components of a device in accordance with some embodiments.
FIG. 7 illustrates example interfaces of baseband circuitry in accordance with some embodiments.
FIG. 8 illustrates components of a core network in accordance with some embodiments.
FIG. 9 is a block diagram illustrating components, according to some example embodiments, of a system to support network function virtualization.
FIG. 10 is a block diagram illustrating components, according to some example embodiments, able to read instructions from a machine-readable or computer-readable and perform any one or more of the methods discussed herein.

### Detailed Description of Preferred Embodiments

A detailed description of systems and methods consistent with embodiments of the present disclosure is provided below. While several embodiments are described, it should be understood that the disclosure is not limited to any one embodiment, but instead encompasses numerous alternatives and modifications. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

Embodiments disclosed herein provide for connections between a RAN and a core network that are suitable for a virtualized network environment. A 5G core network or NGC leverages network function virtualization (NFV) techniques. For example, contrary to current 3GPP evolved packet core (EPC) architectures of an evolved packet system (EPS), a 5G system according to certain embodiments handles and may minimize the "stickiness" or persistent association of a specific UE with a specific NGC control plane function. Thus, as discussed in detail below, an MME, an MME pool, or a network function such as an access and mobility function (AMF) may connect to a RAN via multiple transport network layer (TNL) associations.

An MME pool is a set of discrete MMEs that share in common the same service area. Thus, for example, each MME in the pool may be capable of handling any UEs that are currently roaming within the common service area. A reason for grouping MMEs together in a pool is the ability to increase the processing power in the service area. An MME pool may be used, for example, when the UE population in a service area grows beyond the capacity of a single MME machine.

NFV may achieve similar goals as an MME pool, with a difference being that processing power can be added progressively in granular manner, contrary to MME pools where processing power is added in discrete quantities. Further, when one MME is withdrawn from a pool (e.g., for maintenance purposes), the UE population that is under the control of the withdrawn MME needs to be distributed to other MMEs in the pool. This procedure is called MME load re-balancing and is described in 3GPP TS 23.401, section 4.3.7.3. The MME load re-balancing procedure is not smooth because it includes radio resource control (RRC) connection release with a cause value inviting the UE to perform "Tracking Area Update due to MME load re-balancing." When the UE subsequently performs a Tracking Area update (TA update), it does not provide an MME code (MMEC, a parameter uniquely identifying an MME within an MME pool) nor an SAE-temporary mobile subscriber identity (S-TMSI, a temporary UE identifier (TempID) assigned by the serving MME), which leads the eNB to select another MME from the MME pool.

The procedure for MME load re-balancing may increase overhead and delay through increased signaling due to UE "stickiness" or persistent association with a specific MME. Because the MMEC is part of the UE temporary identifier (GUTI), if a UE is reassigned to another MME, a new GUTI is signaled to the UE. Moreover, the procedure for MME load re-balancing also causes a service break wherein the user plane continuity is interrupted upon RRC connection release and is only re-established at the end of the TA update procedure.

Thus, certain embodiments herein relate to a solution that avoids UE "stickiness" or persistent association to a specific control plane function in the core network. The solution may apply to UEs in both idle and connected modes. In certain embodiments, the temporary UE identifier (e.g., GUTI or MME-TMSI (M-TMSI)) does not identify a specific CN control plane function. In addition or in other embodiments, at any time after an initial attach procedure, there is a logical CN control plane function that serves the UE, which may be referred to herein as a "serving" CN control plane function.

In certain embodiments, the association between a UE and its serving CN control plane function is stored in a database that can logically be considered part of the CN, but can also be queried by RAN nodes. For a UE performing an attach procedure, or for UE moving from idle to connected mode, the RAN node queries the database to obtain the identity of the serving CN control plane function. The RAN resolves the identity of the serving CN control plane function into a physical address (e.g., IP address) and establishes a TNL association (see, e.g., 3GPP TS 36.413) with that physical address (unless there is already one). The UE-specific association between the RAN and the physical address becomes "sticky" such that for UE-specific signaling on the interface between the RAN and the CN (i.e., on the S1-MME interface and NG2 interface in EPC and NGC, respectively) the messages are exchanged over the same TNL association. In other words, the RAN node does not need to query the database as long as it has a "sticky" or persistent UE-specific RAN-CN association.

At some point, the CN may determine to terminate the UE-specific RAN-CN association (e.g., if the CN determines that it needs to assign a new serving CN control plane function for this UE, or because CN operates in stateless manner). In response, the current serving CN plane function sends a message to the RAN indicating that the UE-specific RAN-CN association is terminated and stores the association between the UE and its new serving CN control plane function in the database.

If the UE initiates non-access stratum (NAS) signaling with the CN while there is no "sticky" UE-specific RAN-CN association, according to certain embodiments, the RAN queries the database to obtain the identity of the new serving CN control plane function. Conversely, if the CN initiates NAS signaling with the UE while there is no "sticky" UE-specific RAN-CN association, the new serving CN control plane function initiates a messaging transaction with the RAN, which also creates a new "sticky" UE-specific RAN-CN association between the new serving CN control plane function and the RAN.

An approach similar to those described above can be applied to a CN user plane function (i.e., user plane SGW (SGW-U) and user plane function (UPF) in EPC and NGC, via the Sxa interface and NG4 interface, respectively), wherein the CN user plane function is in the same role as previously described for the RAN, but this time for mobile terminated transactions (e.g., downlink data notification).

In other embodiments, an alternative approach is provided where the database is replaced with a logical load balancer functionality that can be reached by RAN via a designated TNL association (or set of TNL associations).

As discussed below, certain embodiments may work when the RAN node is connected to multiple data centers.

Additional details and examples are provided with reference to the figures below. The embodiments of the disclosure can be understood by reference to the drawings, wherein like parts are designated by like numerals throughout. The components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments.

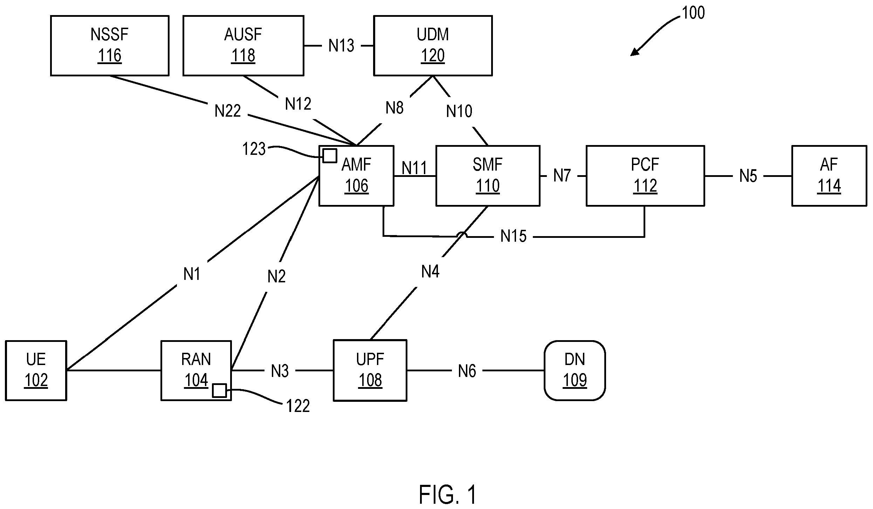

FIG. 1 is a block diagram illustrating a 5G system architecture 100 configured according to certain embodiments. The 5G system architecture 100 includes network functions (NFs) and reference points or interfaces connecting NFs. One or more of the NFs can be implemented either as a network element on a dedicated hardware, as a software instance running on a dedicated hardware, or as a virtualized function instantiated on an appropriate platform, e.g., a cloud infrastructure. As illustrated, a UE 102 is connected to a RAN 104, as well as an AMF 106 through a first interface N1 for NAS signaling. In this example embodiment, the RAN 104 may comprise a 5G RAN (i.e., NG RAN) or a non-3GPP AN configured to connect to the 5G core network.

FIG. 1 illustrates eight example NFs comprising a core network of the 5G system architecture. Persons skilled in the art will recognize, however, that additional or fewer NFs may be used in certain embodiments. The eight example NFs include the AMF 106 connected to the RAN 104 through a second interface N2 (or control plane interface), a user plane function (UPF) 108 connected to the RAN 104 through a third interface N3 (or user plane interface) and to a data network (DN) 109 through interface N6, a session management function (SMF) 110 connected to the UPF 108 through interface N4 and to the AMF 106 through interface N11, a policy control function (PCF) 112 connected to the SMF 110 through interface N7 and to the AMF 106 through interface N15, an application function (AF) 114 connected to the PCF 112 through interface N5, a network slice selection function (NSSF) 116 connected to the AMF 106 through interface N22, an authentication server function (AUSF) 118 connected to the AMF 106 through interface N12, and a user data management (UDM) function 120 connected to the AUSF 118 through interface N13, to the AMF 106 through interface N8, and to the SMF 110 through interface N10.

The AMF 106 provides UE-based authentication, authorization, mobility management, and other functions. The UE 102, even if using multiple access technologies, may be connected to a single AMF because the AMF 106 is independent of the access technologies. The SMF 110 configured for session management and allocates IP addresses to UEs. The SMF 110 also selects and controls the UPF 108 for data transfer. If the UE 102 has multiple sessions, different SMFs may be allocated to each session to manage them individually and possibly provide different functionalities per session. The AF 114 provides information on the packet flow to PCF 112 responsible for policy control in order to support Quality of Service (QoS). Based on the information, PCF 112 determines policies about mobility and session management to make the AMF 106 and SMF 110 operate properly. The AUSF 118 stores data for authentication of the UE 102 while the UDM 120 stores subscription data of UE 102. The NSSF 116 selects a network slice instance. The DN 109, which is not part of the core network, provides internet access or operator services.

In certain embodiments, the RAN 104 (or a node within the RAN 104) includes logic 122, which comprises circuitry, one or more processor (e.g., a baseband processor), software, or a combination of the foregoing, to handle or control UE-specific associations on the N2 interface between the RAN 104 and the AMF 106. The logic 122 may include a memory interface to send or receive, to or from a memory device, data corresponding to a plurality of TNL associations between the RAN 104 and the AMF 106. For the UE 102 in a connected state with the AMF 106 through the N1 interface, the logic 122 is configured to maintain a binding between an N2 interface application layer protocol (NGAP) association for the UE 102 and a corresponding TNL association of the plurality of TNL associations. The NGAP may also be referred to herein as "S1AP" or "N2AP." Similarly, the N2 interface may be referred to herein as the "NG2" interface. The NGAP UE association is the logical per UE association between, for example, a 5G AN node in the RAN 104 and the AMF 106. An NGAP UE-TNLA-binding is the binding between an NGAP UE association and a specific TNL association for a given UE. The logic 122 is further to determine, with the UE 102 in the connected state, an update of the binding by the AMF 106. In response to the update by the AMF 106, the logic 122 changes or releases the binding.

In certain embodiments, the logic 122 is configured to use triangular redirection or redirection via the AN node of the RAN 104 to determine the update of the binding by the AMF 106. The triangular redirection includes generating a message to communicate to the AMF 106 through the N2 interface using a first TNL association, and processing a response to the message from the AMF 106 through the N2 interface using a second TNL association. Alternatively, the redirection via the AN node includes generating a message to communicate to the AMF 106 through the N2 interface using a first TNL association, and processing a response to the message from the AMF 106 through the N2 interface using the first TNL association, wherein the response comprises an indication to retry the message through the N2 interface using a second TNL association.

When the UE 102 connects to the core network via the AN node of the RAN 104, the logic 122 may be configured to create the binding by selection of the corresponding TNL association from a subset of the plurality of TNL associations permitted for an initial UE message through the N2 interface for the AMF 106. The TNL associations permitted for an initial UE message through the N2 interface may be referred to herein as a "designated" TNL association. Further, those TNL associations that are not permitted for an initial UE message through the N2 interface may be referred to herein as a "non-designated" TNL association. In certain embodiments, when the UE 102 connects to the core network via the AN node without a signaling connection through the N1 interface with an AMF or with a signaling connection through the N1 interface with an AMF that is not associated with the AN node, the logic 122 is further configured to select the corresponding TNL association from the subset of the plurality of TNL associations permitted for the initial UE message through the N2 interface for the AMF, and forward the initial UE message to the AMF 106 via the corresponding TNL association. In certain embodiments, the selection of the corresponding TNL may be a random selection.

In certain embodiments, the logic 122 is further configured to process a command, from the AMF 106 at any time, to release the binding for the UE 102 in the connected state and maintain user-plane connectivity to the core network through the N3 interface. The command may be in a UE-specific binding release message on a current TNL association. Subsequent to the release of the binding for the UE 102, the logic 122 may be further configured to identify a new message to send through the N2 interface to the AMF 106 for the UE 102, create a new binding between the NGAP association for the UE 102 and a selected TNL association from a subset of the plurality of TNL associations permitted for initial UE messages through the N2 interface, and generate the new message for the AMF 106 through the selected TNL association. The logic 122 may further be configured to modify the new binding by triangular redirection or redirection via the AN node, as described above.

In certain embodiments, the AMF 106 includes logic 123, which comprises circuitry, one or more processor (e.g., a baseband processor), software, or a combination of the foregoing, to handle or control UE-specific associations on the N2 interface between the RAN 104 and the AMF 106. The logic 123 is configured to generate a configuration message to send to the RAN 104 that indicates a set of designated TNL associations available for reception of initial UE messages through the N2 interface, process a first initial UE message received through the N2 interface via a first designated TNL association of the set of designated TNL associations for the UE 102, and provide an indication to the RAN 104 of whether to use the first designated TNL association or a different TNL association selected by the AMF 106 as a current TNL association for subsequent messages for the UE 102.

The logic 123 may further be configured to, at any time, change the current TNL association to a new TNL association for the UE 102 or release the current TNL association for the UE 102. To change the current TNL association, the logic 123 is further to generate a UE-specific message for the UE 102 on the new TNL association that is different than the current TNL association. Alternatively, to change the current TNL association, the logic 123 is further to generate a UE-specific message on the current TNL association comprising information for the new TNL association that is different than the current TNL association. In either case, the configuration message may further indicate a set of non-designated TNL associations that are unavailable for reception of the initial UE messages and are available for subsequent UE related signaling through the interface, and the logic 123 is further to select the new TNL association from one of the set of designated TNL associations and the set of non-designated TNL associations.

In certain embodiments, to release the current TNL association for the UE 102, the logic 123 is configured to generate a release message for RAN 104 on the current TNL association, and maintain user plane connectivity for the UE 102.

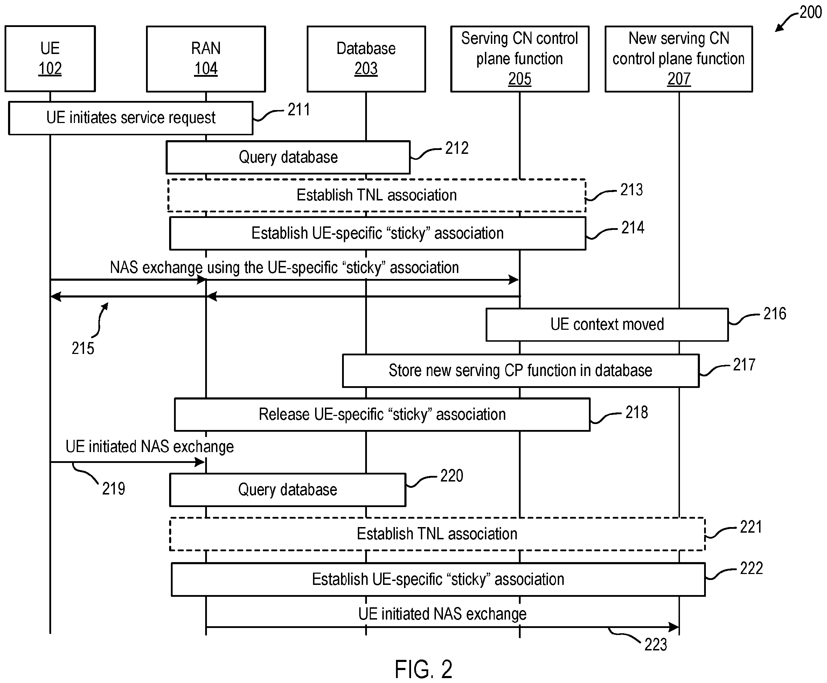

FIG. 2 is a flow diagram illustrating a procedure 200 for handling of stickiness or persistence of UE-specific associations on a RAN-CN interface according to certain embodiments. In this example embodiment, the flow diagram illustrates signaling or interaction between the UE 102, the RAN 104, a database 203, a serving CN control plane function 205, and a new serving CN control plane function 207.

As shown at element 211 of the process 200 shown FIG. 2, the UE 102 initiates a service request procedure to initiate signaling exchange with the CN. As part of the request, the UE 102 provides a temporary UE identifier (e.g., GUTI or M-TMSI in EPS; TempID in NGC). In contrast to EPS, the temporary UE identifier of this example embodiment does not identify a specific CN control plane function. Further, in this example, the overall call flow is triggered by a service request (i.e., the UE 102 requesting to move from idle to connected mode). The procedure described below also applies to other cases where the RAN node receives a request from a UE for which it has no established UE-specific RAN-CN association (e.g., tracking area update, attach, handover complete, etc.).

The serving CN control plane function 205 is available, at any time after an initial attach procedure, to serve the UE 102. The serving CN control plane function 205 may include, for example, the AMF 106 or any of the other NFs shown in FIG. 1. In this embodiment, an association between UE 102 and the serving CN control plane function 205 is stored in the database 203 that can logically be considered part of the CN, but can also be queried by the RAN 104. At element 212 of the process 200, the RAN 104 (or a node in the RAN 104) queries the database 203 to obtain the identity of the serving CN control plane function 205.

At element 213 of the process 200, the RAN 104 resolves the identity of the serving CN control plane function 205 into a physical address (e.g., IP address) and establishes a TNL association with that physical address. In certain embodiments, establishing the TNL association may be optional as the RAN 104 may already have a TNL association with this CN control plane function 205 (e.g., because other UEs controlled by the same RAN node are already served by the same CN control plane function).

At element 214 of the process 200, the RAN 104 establishes UE-specific association between the RAN 104 and the serving CN control plane function 205. In certain embodiments, the UE-initiated NAS transaction with the CN (initiated at element 211 of the process 200) can be combined with the establishment of the UE-specific RAN-CN association.

As shown at element 215 of the process 200, this UE-specific RAN-CN association between the RAN 104 and the serving CN control plane function 205 becomes "sticky" (i.e., persistent) for all UE-specific signaling on the interface between the RAN 104 and the CN (i.e., on the N2 interface shown in FIG. 1, also referred to herein as the S1-MME or NG2 interface in EPC and NGC, respectively) such that the messages are exchanged over the same TNL association. In other words, the RAN node does not need to query the database as long as it has a "sticky" UE-specific RAN-CN association.

At some point the CN may determine to terminate the UE-specific RAN-CN association. For example, this may be the case when the CN decides to assign the new serving CN control plane function 207 for this UE 102. The new CN control plane function 207 may include, for example, the AMF 106 or any of the other NFs shown in FIG. 1. At element 216 of the process 200, before releasing the UE-specific RAN-CN association, the CN moves a copy of the UE context to the new serving CN control plane function 207. At element 217 of the process 200, the CN stores the association between the UE 102 and the new serving CN control plane function 207 in the database 203. At element 218 of the process 200, the current serving CN control plane function 205 sends a message to RAN 104 indicating that the UE-specific RAN-CN association is terminated. In certain embodiments, element 218 of the process 200 may be performed even without prior execution of element 217. In other words, the CN may decide to terminate the "sticky" UE-specific RAN-CN association without moving the UE context to a new CN control plane function. For example, the CN may operate in stateless mode, which means that the CN releases the UE-specific RAN-CN association as soon as the end-to-end signaling transaction is completed.

As shown at element 219 of the process 200, wherein the UE is already in the connected mode, at some point the UE 102 initiates a new NAS transaction with the CN. At element 220 of the process 200, given that the RAN 104 does not have a "sticky" UE-specific RAN-CN association, the RAN 104 queries the database 203 to obtain the identity of the new serving CN control plane function 207. At element 221 of the process 200 the RAN 104 resolves the identity of the new serving CN control plane function 207 into a physical address (e.g., IP address) and establishes a TNL association with that physical address. As discussed above, the element 221 may be optional as the RAN 104 may already have a TNL association with the new CN control plane function 207. At element 222 of the process 200, the RAN 104 establishes the UE-specific RAN-CN association between the RAN 104 and the new CN control plane function 207. At element 223 of the process 200, the RAN 104 proceeds with the UE-initiated NAS transaction with the CN.

Alternatively, according to other embodiments, if after element 218 the CN initiates NAS signaling with the UE 102 while there is no "sticky" UE-specific RAN-CN association, the new serving CN control plane function 207 initiates a messaging transaction with the RAN 104, which also creates a new "sticky" UE-specific RAN-CN association between the new serving CN control plane function 207 and the RAN 104.

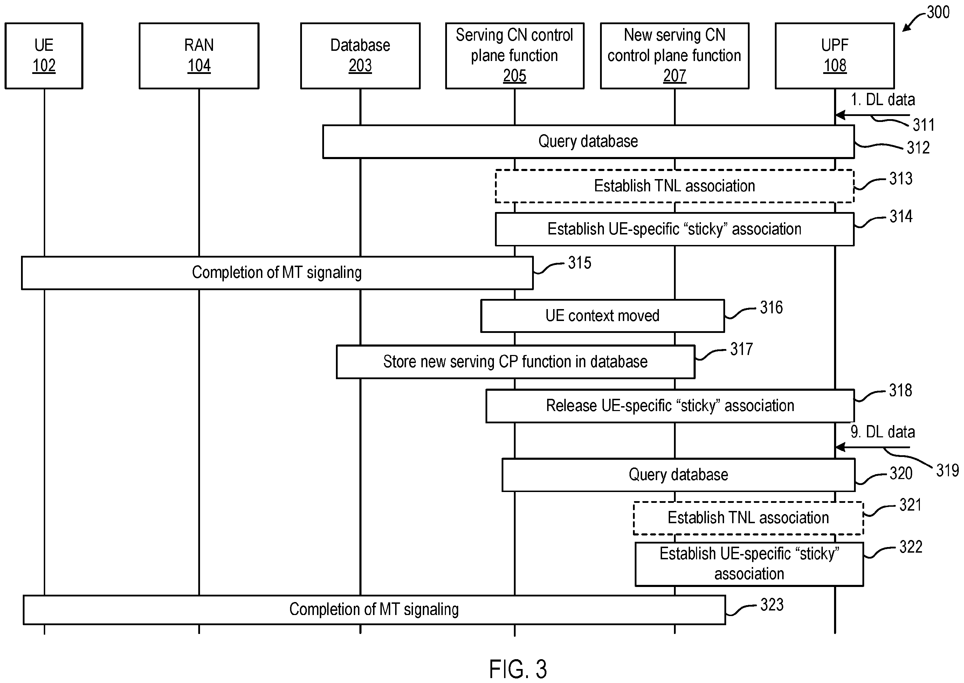

In certain embodiments, a similar approach may be applied between a CN user plane function (e.g., SGW-U and UPF in EPC and NGC, via the Sxa and NG4 interface, respectively), the CN user plane function being in the same role as previously described for RAN, as shown in FIG. 3.

FIG. 3 is a flow diagram illustrating a procedure 300 for handling of stickiness or persistence of UE-specific associations on an interface between the UPF 108 and the serving CN control plane function 205 according to certain embodiments. In the example shown in FIG. 3, the procedure 300 is triggered by a mobile terminated (MT) transaction (e.g., downlink (DL) data notification), as shown at elements 311 and 319. At element 312 of the process 300, the UPF 108 queries the database 203 to obtain the identity of the serving CN control plane function 205. At element 313 of the process 300, the UPF 108 resolves the identity of the serving CN control plane function 205 into a physical address (e.g., IP address) and establishes a TNL association with that physical address. In certain embodiments, establishing the TNL association may be optional as the UPF 108 may already have a TNL association with this CN control plane function 205. At element 314 of the process 300, the UPF 108 establishes UE-specific association between the UPF 108 and the serving CN control plane function 205.

As shown at element 315 of the process 300, the completion of the MT signaling uses the UE-specific UPF-CN association between the UPF 108 and the serving CN control plane function 205, which has become "sticky" (i.e., persistent) for all UE-specific signaling on the interface between the UPF 108 and the CN such that the MT signaling are exchanged over the same TNL association. In other words, the UPF does not need to query the database as long as it has a "sticky" UE-specific UPF-CN association.

At some point the CN may determine to terminate the UE-specific UPF-CN association. At element 316 of the process 300, before releasing the UE-specific UPF-CN association, the CN moves a copy of the UE context to the new serving CN control plane function 207. At element 317 of the process 300, the CN stores the association between the UE 102 and the new serving CN control plane function 207 in the database 203. At element 318 of the process 300, the current serving CN control plane function 205 sends a message to UPF 108 indicating that the UE-specific UPF-CN association is terminated.

As shown at element 319 of the process 300, at some point the UPF 108 receives a new DL data notification. At element 320 of the process 300, given that the UPF 108 does not have a "sticky" UE-specific UPF-CN association, the UPF 108 queries the database 203 to obtain the identity of the new serving CN control plane function 207. At element 321 of the process 300 the UPF 108 resolves the identity of the new serving CN control plane function 207 into a physical address (e.g., IP address) and establishes a TNL association with that physical address. As discussed above, the element 321 may be optional as the UPF 108 may already have a TNL association with the new CN control plane function 207. At element 322 of the process 300, the UPF 108 establishes the UE-specific UPF-CN association between the UPF 108 and the new CN control plane function 207. At element 323 of the process 300, the completion of the MT signaling uses the UE-specific UPF-CN association between the UPF 108 and the new CN control plane function 207.

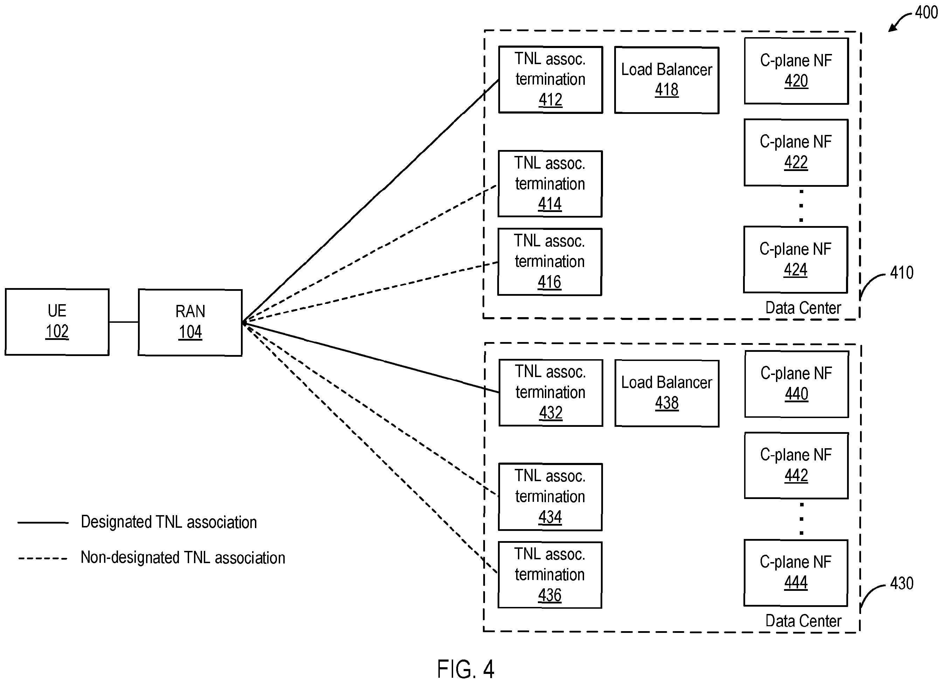

In another embodiment, rather than using the database shown in FIGS. 2 and 3, a logical load balancer functionality is used that can be reached by the RAN 104 via a designated TNL association (or set of TNL associations). For example, FIG. 4 is a block diagram of a RAN 104 configured to communicate with a plurality of network functions in one or more data centers according to certain embodiments. In this example, a first data center 410 and a second data center 430 are shown. However, persons skilled in the art will recognize that the principles apply to a single data center (e.g., the first data center 410) or to more than two data centers.

The example shown in FIG. 4 also includes a plurality of control plane (C-plane) NFs in each data center 410, 430. The first data center 410 includes C-plane NFs 420, 422, ..., 424, and the second data center 430 includes C-plane NFs 440, 442, ... 444. Persons skilled in the art will recognize from the disclosure herein that the data centers 410, 430 may include any number of C-plane NFs. Further, any of the NFs 420, 422, 424, 440, 442, 444 may comprise one of, or a combination of, the NFs discussed above in relation to FIG. 1. For example, two or more of the NFs 420, 422, 424, 440, 442, 444 shown in FIG. 4 may be used in an MME pool or may comprise the AMF shown in FIG. 1. In other words, two or more of the NFs 420, 422, 424, 440, 442, 444 may comprise a single AMF that is reachable via multiple TNL associations.

In this example, the RAN 104 (or a node in the RAN 104) can connect to more than one data center to support geographical redundancy, in which case there is at least one load balancer 418, 438 functionality per data center 410, 430. Each data center 410. 430 may include multiple data centers. In certain embodiments, the embodiment shown in FIG. 1 also includes an explicit or implicit load balancer to allow scaling of the AMF 106 as more UEs connect through the RAN 104.

The term "TNL association" may be used here to designate any transport network level association that is used for transport of NG2 (also referred to as N2) messages between the RAN 104 and the CN. Examples of a TNL association include the following: single stream control transmission protocol (SCTP) association (as in EPS), a multi-homed SCTP association, a set of SCTP associations bundled together via the upper layer (e.g., a transaction identifier in the NG2-AP protocol), etc. As shown in FIG. 4, each TNL association is associated with a corresponding TNL association termination accessible by the load balancer 418, 438 of its data center 410, 430. For example, in the first data center 410, TNL association termination 412 terminates a designated TNL association, and TNL association terminations 414, 416 terminate respective non-designated TNL associations. Similarly, in the second data center 430, TNL association termination 432 terminates a designated TNL association, and TNL association terminations 434, 436 terminate respective non-designated TNL associations. As discussed above, a designated TNL association may be referred to herein as a TNL association permitted for an initial UE message through the NG2 interface (also called the N2 interface), whereas a non-designated TNL association may be referred to as a TNL association that is not permitted for an initial UE message through the NG2 interface (also called the N2 interface). Thus, in addition to the designated set of TNL associations to the load balancers 418, 438, the RAN 104 may also have a pre-established set of "non-designated" TNL associations that are used for exchange of NG2 (or N2) signaling with the serving NFs. In some cases, a non-designated TNL association can be established on the fly, based on information received from the respective load balancer 418, 438.

For the UE 102 in connected mode, the RAN 104 may or may not have a current UE-specific RAN-CN association. If there is a UE-specific RAN-CN association specific to the UE 102, the RAN knows the identity of the serving NF and the TNL association to use when sending an NG2 (or N2) message to it. However, when the UE 102 makes an initial access from idle mode, and at certain other times, the RAN 104 does not have a UE-specific RAN-CN association. When the UE 102 is in connected mode, the RAN 104 may or may not have such association when it needs to initiate an NG2 (or N2) message exchange with the CN.

A difference between S1 operation and certain embodiments herein is that TNL (e.g., SCTP connection or its NR equivalent) association establishment is decoupled from the S1 setup procedure (or its 5G or new radio (NR) equivalent). In LTE, S1 setup may immediately follow S1 TNL connection establishment. However, in certain embodiments herein, S1 setup (or its 5G or NR equivalent) can happen any time, i.e., not necessarily and not only after the TNL association.

In certain embodiments, if the RAN 104 does not have a UE-specific RAN-CN association when it needs to initiate NG2 (or N2) message exchange with the CN, it uses one of the designated TNL associations shown in FIG. 4 to send the NG2 (or N2) message via a load balancer 418, 438. The load balancer 418, 438 selects a serving NF from among the C-plane NFs 420, 422, 424, 440, 442, 444 for the UE 102 and assists the RAN 104 in establishing a RAN-CN association with the assigned serving NF.

The establishment of a RAN-CN association can be done in several ways. For example, having selected a serving NF, the load balancer returns the serving NF identity and the associated TNL association (indicated through the physical transport address that terminates the TNL association on the CN side). If the TNL association to this physical address does not exist, the RAN 104 establishes the TNL association on the fly. In this case, the RAN 104 re-sends the initial NG2 (or N2) message to the assigned serving NF. This approach may be similar to the previously-described database approach and may be referred to herein as redirection via the RAN 104 where the CN is in the role of the database.

In another embodiment, the establishment of a RAN-CN association can be done by, having selected a serving NF, the load balancer 418, 438 forwards the NG2 (or N2) message to the selected serving NF. The serving NF sends a message to the RAN 104 via an existing TNL association to confirm the establishment of the RAN-CN association. The RAN 104 may generate a one-time token (i.e., a transaction identifier) in the initial message to the load balancer 418, 438 that is returned by the serving NF in the message that it sends to the RAN 104 to enable linkage of the outgoing and incoming messages. The NG2 (or N2) message returned by the serving NF may be a dummy message used only to complete the establishment of the RAN-CN association, or it may carry a message corresponding to an end-to-end (e2e) signaling transaction.

In certain embodiments, as long as the RAN 104 has a UE-specific RAN-CN association, it uses it. At any instant in time, the CN may decide to release the UE-specific RAN-CN association, in which case the RAN 104 goes through the load balancer in the example of FIG. 4 for future transactions.

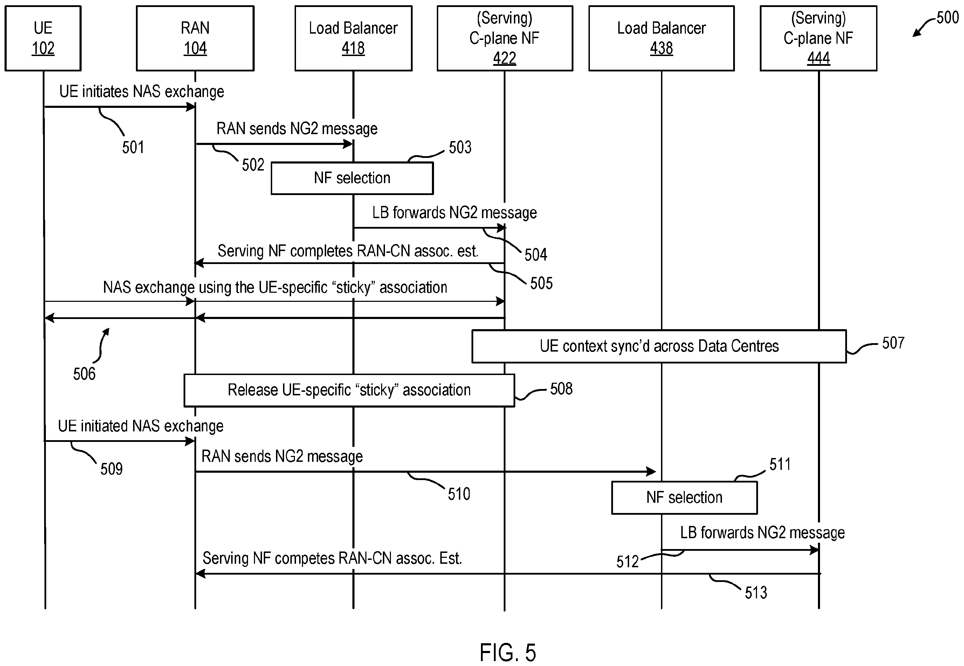

FIG. 5 is a flow diagram illustrating a procedure 500 for handling of stickiness or persistence of UE-specific associations on a RAN-CN interface using a load balancer according to certain embodiments. In this example embodiment, the flow diagram illustrates signaling or interaction between the UE 102, the RAN 104, the load balancer 418, the C-plane NF 422, the load balancer 438, and the C-plane NF 444 shown in FIG. 4. The C-plane NF 422 and the C-plane NF 444 are illustrated by way of example only to be "serving" NFs. Any of the other NFs discussed herein could also be used.

As shown at element 501 of the procedure 500, the UE 102 initiates a NAS signaling transaction. In contrast to EPS deployments, the temporary UE identifier does not identify a specific CN control plane function. At element 502 of the procedure 500, as the RAN 104 does not have a UE-specific RAN-CN association for the UE 102, the RAN 104 uses one of the designated TNL associations to send the NG2 (or N2) message via the load balancer 418 residing in the first data center 410 shown in FIG. 4. The RAN 104 may generate a one-time token (i.e., a transaction identifier) in the initial message to the load balancer 418.

At element 503 of the procedure 500, the load balancer 418 selects a serving NF (in this example the C-plane NF 422) in the first data center 410 for the UE 102 and assists the RAN 104 in establishing a RAN-CN association with the assigned serving NF. At element 504 of the procedure 500, having selected the serving NF, the load balancer (LB) 418 forwards the NG2 (or N2) message to the selected C-plane NF 422.

At element 505 of the procedure 500, the serving NF (C-plane NF 422) sends an NG2 (or N2) message to the RAN 104 via an existing TNL association to confirm the establishment of the RAN-CN association. The message may include the one-time token that was generated by the RAN 104 to enable linkage of the outgoing and incoming messages (e.g., for triangular redirection where a request or message sent using TNL association is confirmed or acknowledged using another TNL association). The NG2 (or N2) message returned by the serving NF (the C-plane NF 422) may be a dummy message used only to complete the establishment of the RAN-CN association, or it may carry a message corresponding to the e2e signaling transaction.

At element 506 of the procedure 500, this UE-specific RAN-CN association between the RAN 104 and the serving NF (the C-plane NF 422) becomes "sticky" (i.e., persistent) for all UE-specific signaling on the interface between the RAN 104 and CN (i.e., on the S1-MME and NG2 (or N2) interface in EPC and NGC, respectively) such that the messages are exchanged over the same TNL association. In other words, the RAN 104 (or a node in the RAN 104) does not need to go via the load balancer 418 as long as it has a "sticky" UE-specific RAN-CN association.

At element 507 of the procedure 500, at some point the CN determines to terminate the UE-specific RAN-CN association. For example, this is the case when the CN has managed to synchronize the UE context across the data centers 410, 430 that serve this RAN node. At element 508 of the procedure 500, the current serving NF (the C-plane NF 422) sends a message to the RAN 104 indicating that the UE-specific RAN-CN association is terminated. In certain embodiments, element 508 can be performed even without prior execution of element 507. In other words, the CN may decide to terminate the "sticky" UE-specific RAN-CN association without prior synchronization of UE context across the data centers serving this RAN node. In such cases, the release message indicates to the RAN node that in the future it should attempt to contact a load balancer from the same data center.

At element 509 of the procedure 500, at some point the UE 102 initiates a new NAS transaction with the CN. At element 510 of the procedure 500, given that the RAN 104 does not have a "sticky" UE-specific RAN-CN association, the RAN 104 sends the initial NG2 (or N2) message via a load balancer by using one of the designated TNL associations. Unless the CN has indicated in element 508 that the RAN 104 must use a load balancer from the same data center (the first data center 410), the RAN 104 may send the initial NG2 (or N2) message in element 510 to a load balancer in a different data center. Thus, in this example, the RAN 104 sends the initial NG2 (or N2) message in element 510 to the load balancer 438 in the second data center 430 shown in FIG. 4.

At element 511 of the procedure 500, the load balancer 438 selects a serving NF (in this example the C-plane NF 444) in the second data center 430 for the UE 102 and assists the RAN 104 in establishing a RAN-CN association with the assigned serving NF. At element 512 of the procedure 500, having selected the serving NF, the load balancer (LB) 438 forwards the NG2 (or N2) message to the selected C-plane NF 444. At element 513 of the procedure 500, the serving NF (C-plane NF 444) sends an NG2 (or N2) message to the RAN 104 via an existing TNL association to confirm the establishment of the RAN-CN association. The NG2 (or N2) message returned by the serving NF (the C-plane NF 444) may be a dummy message used only to complete the establishment of the RAN-CN association, or it may carry a message corresponding to the e2e signaling transaction.

Persons skilled in the art will recognize from the disclosure herein that different interfaces and NFs may be used. For example, the procedure described in FIG. 5 can also be applied to the NG4 interface, the UPF 108 being in the role of the RAN 104. Note that a similar issue may occur, if the RAN 104 is deployed with NFV. Similarly, "virtual gNBs" may be created "on the fly". Therefore, a similar concept may be applied on the RAN side of the NG2 interface as well.

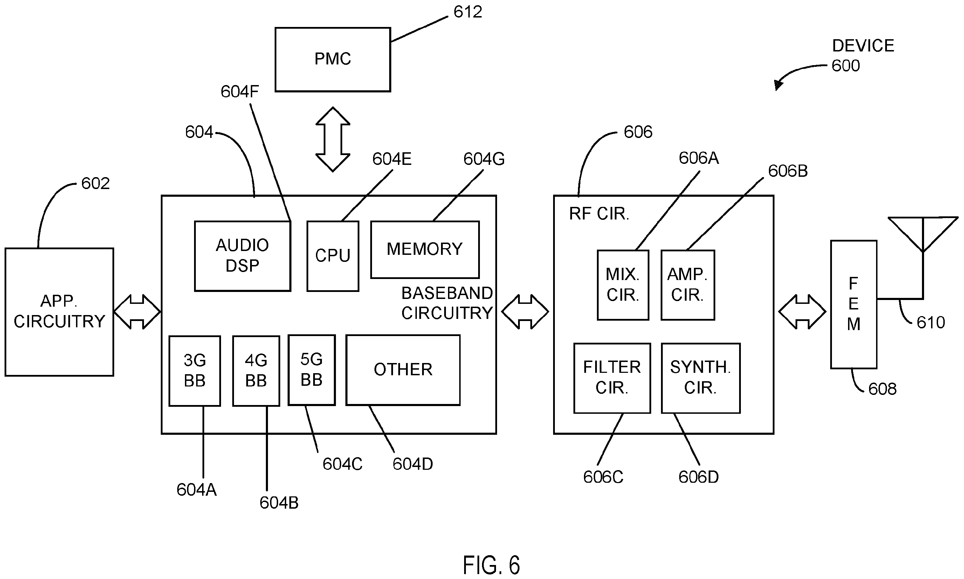

FIG. 6 illustrates example components of an apparatus or device 600 in accordance with some embodiments. In some embodiments, the device 600 may include application circuitry 602, baseband circuitry 604, Radio Frequency (RF) circuitry 606, front-end module (FEM) circuitry 608, one or more antennas 610, and power management circuitry (PMC) 612 coupled together at least as shown. The components of the illustrated device 600 may be included in a UE or a RAN node. In some embodiments, the device 600 may include fewer elements (e.g., a RAN node may not utilize application circuitry 602, and instead include a processor/controller to process IP data received from an EPC). In some embodiments, the device 600 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 602 may include one or more application processors. For example, the application circuitry 602 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 600. In some embodiments, processors of application circuitry 602 may process IP data packets received from an EPC.

The baseband circuitry 604 may include circuitry such as, but not limited to, one or more single-core or multi-core processors. The baseband circuitry 604 may include one or more baseband processors or control logic to process baseband signals received from a receive signal path of the RF circuitry 606 and to generate baseband signals for a transmit signal path of the RF circuitry 606. Baseband processing circuity 604 may interface with the application circuitry 602 for generation and processing of the baseband signals and for controlling operations of the RF circuitry 606. For example, in some embodiments, the baseband circuitry 604 may include a third generation (3G) baseband processor 604A, a fourth generation (4G) baseband processor 604B, a fifth generation (5G) baseband processor 604C, or other baseband processor(s) 604D for other existing generations, generations in development or to be developed in the future (e.g., second generation (2G), sixth generation (6G), etc.). The baseband circuitry 604 (e.g., one or more of baseband processors 604A-D) may handle various radio control functions that enable communication with one or more radio networks via the RF circuitry 606. In other embodiments, some or all of the functionality of baseband processors 604A-D may be included in modules stored in the memory 604G and executed via a Central Processing Unit (CPU) 604E. The radio control functions may include, but are not limited to, signal modulation/demodulation, encoding/decoding, radio frequency shifting, etc. In some embodiments, modulation/demodulation circuitry of the baseband circuitry 604 may include Fast-Fourier Transform (FFT), precoding, or constellation mapping/demapping functionality. In some embodiments, encoding/decoding circuitry of the baseband circuitry 604 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 604 may include one or more audio digital signal processor(s) (DSP) 604F. The audio DSP(s) 604F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 604 and the application circuitry 602 may be implemented together such as, for example, on a system on a chip (SOC).

In some embodiments, the baseband circuitry 604 may provide for communication compatible with one or more radio technologies. For example, in some embodiments, the baseband circuitry 604 may support communication with an evolved universal terrestrial radio access network (EUTRAN) or other wireless metropolitan area networks (WMAN), a wireless local area network (WLAN), or a wireless personal area network (WPAN). Embodiments in which the baseband circuitry 604 is configured to support radio communications of more than one wireless protocol may be referred to as multi-mode baseband circuitry.

RF circuitry 606 may enable communication with wireless networks using modulated electromagnetic radiation through a non-solid medium. In various embodiments, the RF circuitry 606 may include switches, filters, amplifiers, etc. to facilitate the communication with the wireless network. The RF circuitry 606 may include a receive signal path which may include circuitry to down-convert RF signals received from the FEM circuitry 608 and provide baseband signals to the baseband circuitry 604. RF circuitry 606 may also include a transmit signal path which may include circuitry to up-convert baseband signals provided by the baseband circuitry 604 and provide RF output signals to the FEM circuitry 608 for transmission.

In some embodiments, the receive signal path of the RF circuitry 606 may include mixer circuitry 606A, amplifier circuitry 606B and filter circuitry 606C. In some embodiments, the transmit signal path of the RF circuitry 606 may include filter circuitry 606C and mixer circuitry 606A. RF circuitry 606 may also include synthesizer circuitry 606D for synthesizing a frequency for use by the mixer circuitry 606A of the receive signal path and the transmit signal path. In some embodiments, the mixer circuitry 606A of the receive signal path may be configured to down-convert RF signals received from the FEM circuitry 608 based on the synthesized frequency provided by synthesizer circuitry 606D. The amplifier circuitry 606B may be configured to amplify the down-converted signals and the filter circuitry 606C may be a low-pass filter (LPF) or band-pass filter (BPF) configured to remove unwanted signals from the down-converted signals to generate output baseband signals. Output baseband signals may be provided to the baseband circuitry 604 for further processing. In some embodiments, the output baseband signals may be zero-frequency baseband signals, although this is not a requirement. In some embodiments, the mixer circuitry 606A of the receive signal path may comprise passive mixers, although the scope of the embodiments is not limited in this respect.

In some embodiments, the mixer circuitry 606A of the transmit signal path may be configured to up-convert input baseband signals based on the synthesized frequency provided by the synthesizer circuitry 606D to generate RF output signals for the FEM circuitry 608. The baseband signals may be provided by the baseband circuitry 604 and may be filtered by the filter circuitry 606C.

In some embodiments, the mixer circuitry 606A of the receive signal path and the mixer circuitry 606A of the transmit signal path may include two or more mixers and may be arranged for quadrature downconversion and upconversion, respectively. In some embodiments, the mixer circuitry 606A of the receive signal path and the mixer circuitry 606A of the transmit signal path may include two or more mixers and may be arranged for image rejection (e.g., Hartley image rejection). In some embodiments, the mixer circuitry 606A of the receive signal path and the mixer circuitry 606A may be arranged for direct downconversion and direct upconversion, respectively. In some embodiments, the mixer circuitry 606A of the receive signal path and the mixer circuitry 606A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 606 may include analog-to-digital converter (ADC) and digital-to-analog converter (DAC) circuitry and the baseband circuitry 604 may include a digital baseband interface to communicate with the RF circuitry 606.

In some dual-mode embodiments, a separate radio IC circuitry may be provided for processing signals for each spectrum, although the scope of the embodiments is not limited in this respect.

In some embodiments, the synthesizer circuitry 606D may be a fractional-N synthesizer or a fractional N/N+1 synthesizer, although the scope of the embodiments is not limited in this respect as other types of frequency synthesizers may be suitable. For example, synthesizer circuitry 606D may be a delta-sigma synthesizer, a frequency multiplier, or a synthesizer comprising a phase-locked loop with a frequency divider.

The synthesizer circuitry 606D may be configured to synthesize an output frequency for use by the mixer circuitry 606A of the RF circuitry 606 based on a frequency input and a divider control input. In some embodiments, the synthesizer circuitry 606D may be a fractional N/N+1 synthesizer.

In some embodiments, frequency input may be provided by a voltage controlled oscillator (VCO), although that is not a requirement. Divider control input may be provided by either the baseband circuitry 604 or the application circuitry 602 (such as an applications processor) depending on the desired output frequency. In some embodiments, a divider control input (e.g., N) may be determined from a look-up table based on a channel indicated by the application circuitry 602.

Synthesizer circuitry 606D of the RF circuitry 606 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 606D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 606 may include an IQ/polar converter.

FEM circuitry 608 may include a receive signal path which may include circuitry configured to operate on RF signals received from one or more antennas 610, amplify the received signals and provide the amplified versions of the received signals to the RF circuitry 606 for further processing. The FEM circuitry 608 may also include a transmit signal path which may include circuitry configured to amplify signals for transmission provided by the RF circuitry 606 for transmission by one or more of the one or more antennas 610. In various embodiments, the amplification through the transmit or receive signal paths may be done solely in the RF circuitry 606, solely in the FEM circuitry 608, or in both the RF circuitry 606 and the FEM circuitry 608.

In some embodiments, the FEM circuitry 608 may include a TX/RX switch to switch between transmit mode and receive mode operation. The FEM circuitry 608 may include a receive signal path and a transmit signal path. The receive signal path of the FEM circuitry 608 may include an LNA to amplify received RF signals and provide the amplified received RF signals as an output (e.g., to the RF circuitry 606). The transmit signal path of the FEM circuitry 608 may include a power amplifier (PA) to amplify input RF signals (e.g., provided by the RF circuitry 606), and one or more filters to generate RF signals for subsequent transmission (e.g., by one or more of the one or more antennas 610).

In some embodiments, the PMC 612 may manage power provided to the baseband circuitry 604. In particular, the PMC 612 may control power-source selection, voltage scaling, battery charging, or DC-to-DC conversion. The PMC 612 may often be included when the device 600 is capable of being powered by a battery, for example, when the device 600 is included in a UE. The PMC 612 may increase the power conversion efficiency while providing desirable implementation size and heat dissipation characteristics.

FIG. 6 shows the PMC 612 coupled only with the baseband circuitry 604. However, in other embodiments, the PMC 612 may be additionally or alternatively coupled with, and perform similar power management operations for, other components such as, but not limited to, the application circuitry 602, the RF circuitry 606, or the FEM circuitry 608.

In some embodiments, the PMC 612 may control, or otherwise be part of, various power saving mechanisms of the device 600. For example, if the device 600 is in an RRC_Connected state, where it is still connected to the RAN node as it expects to receive traffic shortly, then it may enter a state known as Discontinuous Reception Mode (DRX) after a period of inactivity. During this state, the device 600 may power down for brief intervals of time and thus save power.

If there is no data traffic activity for an extended period of time, then the device 600 may transition off to an RRC_Idle state, where it disconnects from the network and does not perform operations such as channel quality feedback, handover, etc. The device 600 goes into a very low power state and it performs paging where again it periodically wakes up to listen to the network and then powers down again. The device 600 may not receive data in this state, and in order to receive data, it transitions back to an RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 602 and processors of the baseband circuitry 604 may be used to execute elements of one or more instances of a protocol stack. For example, processors of the baseband circuitry 604, alone or in combination, may be used to execute Layer 3, Layer 2, or Layer 1 functionality, while processors of the application circuitry 602 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

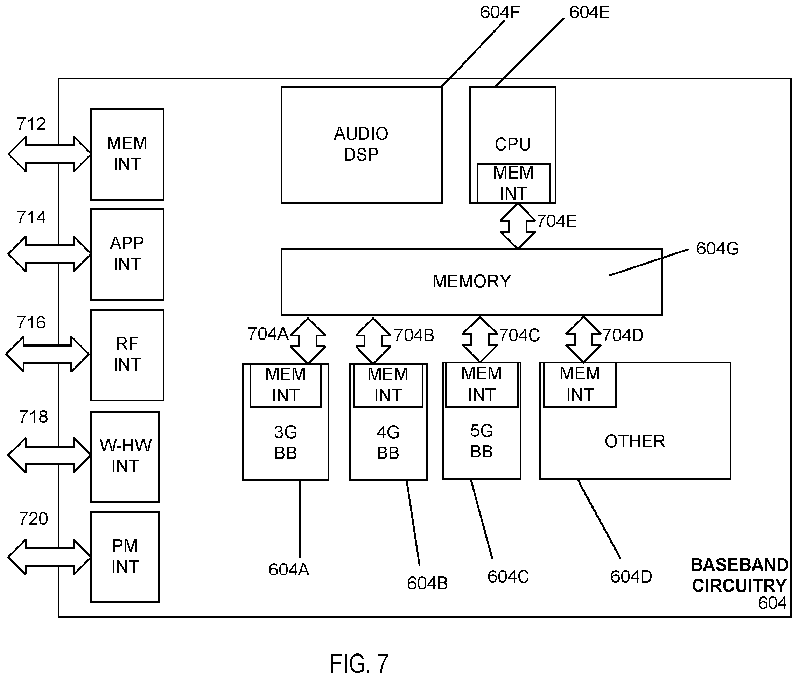

FIG. 7 illustrates example interfaces of baseband circuitry in accordance with some embodiments. As discussed above, the baseband circuitry 604 of FIG. 6 may comprise processors 604A-604E and a memory 604G utilized by said processors. Each of the processors 604A-604E may include a memory interface, 704A-704E, respectively, to send/receive data to/from the memory 604G.

The baseband circuitry 604 may further include one or more interfaces to communicatively couple to other circuitries/devices, such as a memory interface 712 (e.g., an interface to send/receive data to/from memory external to the baseband circuitry 604), an application circuitry interface 714 (e.g., an interface to send/receive data to/from the application circuitry 602 of FIG. 6), an RF circuitry interface 716 (e.g., an interface to send/receive data to/from RF circuitry 606 of FIG. 6), a wireless hardware connectivity interface 718 (e.g., an interface to send/receive data to/from Near Field Communication (NFC) components, Bluetooth® components (e.g., Bluetooth® Low Energy), Wi-Fi® components, and other communication components), and a power management interface 720 (e.g., an interface to send/receive power or control signals to/from the PMC 612.

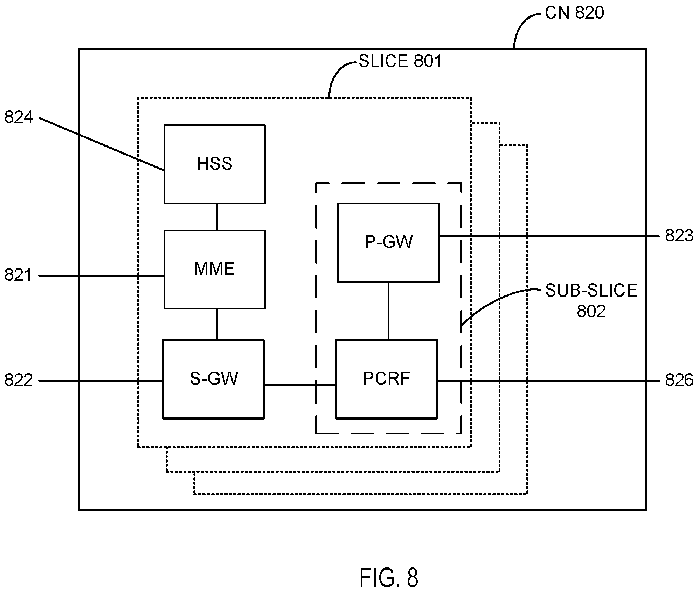

FIG. 8 illustrates components of a core network in accordance with some embodiments. The components of the CN 820 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the CN 820 may be referred to as a network slice 801 and may include, for example, a home subscriber server (HSS) 824, an MME 821, a serving gateway (S-GW) 822, and a network sub-slice 802. The HSS 824 may comprise a database for network users, including subscription-related information to support the network entities' handling of communication sessions. The MME 821 may be similar in function to the control plane of legacy Serving General Packet Radio Service (GPRS) Support Nodes (SGSN). The MME 821 may manage mobility aspects in access such as gateway selection and tracking area list management. The S-GW 822 may be a local mobility anchor point for inter-RAN node handovers, provide an anchor for inter-3GPP mobility, and handle lawful intercept, charging, and some policy enforcement. The network sub-slice 802 comprises a logical instantiation of a portion of the CN 820, and may 8include 8a PGW 823 and a Policy and Charging Enforcement Function (PCRF) 826.

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

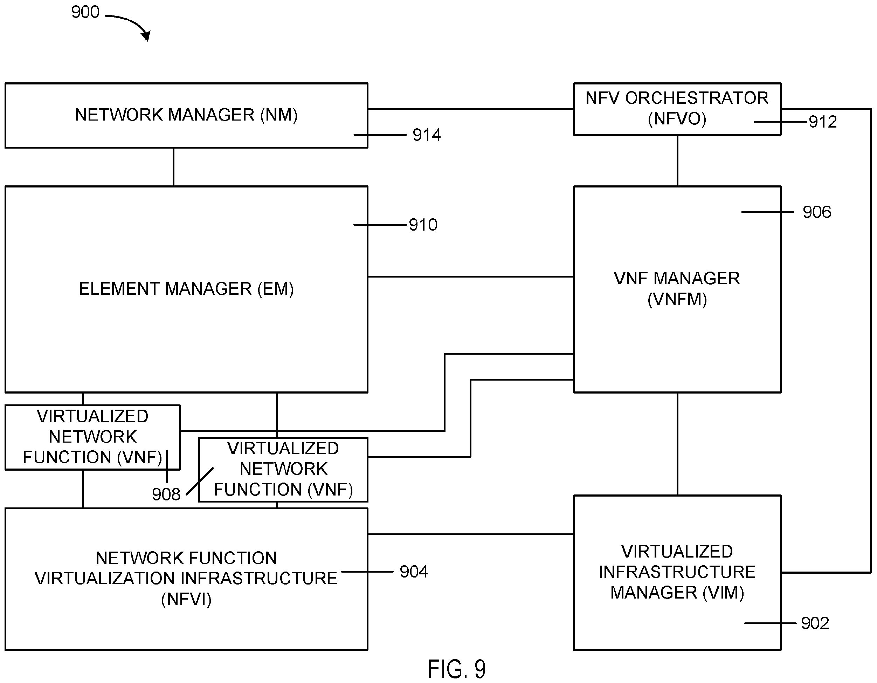

FIG. 9 is a block diagram illustrating components, according to some example embodiments, of a system 900 to support NFV. The system 900 is illustrated as including a virtualized infrastructure manager (VIM) 902, a network function virtualization infrastructure (NFVI) 904, a VNF manager (VNFM) 906, virtualized network functions (VNFs) 908, an element manager (EM) 910, an NFV Orchestrator (NFVO) 912, and a network manager (NM) 914.

The VIM 902 manages the resources of the NFVI 904. The NFVI 904 can include physical or virtual resources and applications (including hypervisors) used to execute the system 900. The VIM 902 may manage the life cycle of virtual resources with the NFVI 904 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 906 may manage the VNFs 908. The VNFs 908 may be used to execute EPC components/functions. The VNFM 906 may manage the life cycle of the VNFs 908 and track performance, fault and security of the virtual aspects of VNFs 908. The EM 910 may track the performance, fault and security of the functional aspects of VNFs 908. The tracking data from the VNFM 906 and the EM 910 may comprise, for example, performance measurement (PM) data used by the VIM 902 or the NFVI 904. Both the VNFM 906 and the EM 910 can scale up/down the quantity of VNFs of the system 900.

The NFVO 912 may coordinate, authorize, release and engage resources of the NFVI 904 in order to provide the requested service (e.g., to execute an EPC function, component, or slice). The NM 914 may provide a package of end-user functions with the responsibility for the management of a network, which may include network elements with VNFs, non-virtualized network functions, or both (management of the VNFs may occur via the EM 910).

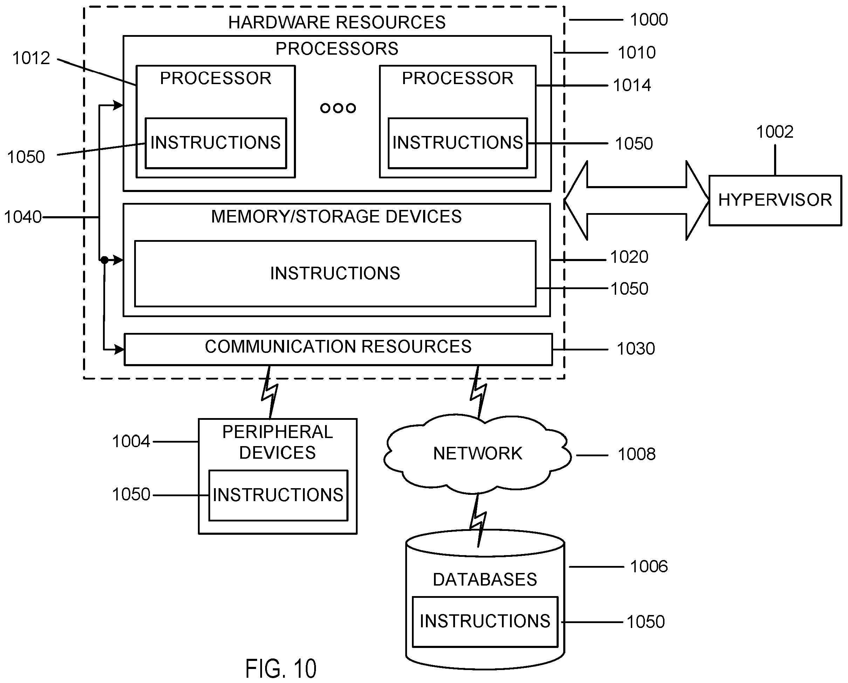

FIG. 10 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 10 shows a diagrammatic representation of hardware resources 1000 including one or more processors (or processor cores) 1010, one or more memory/storage devices 1020, and one or more communication resources 1030, each of which may be communicatively coupled via a bus 1040. For embodiments where node virtualization (e.g., NFV) is utilized, a hypervisor 1002 may be executed to provide an execution environment for one or more network slices/sub-slices to utilize the hardware resources 1000.

The processors 1010 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1012 and a processor 1014.

The memory/storage devices 1020 may include main memory, disk storage, or any suitable combination thereof. The memory/storage devices 1020 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1030 may include interconnection or network interface components or other suitable devices to communicate with one or more peripheral devices 1004 or one or more databases 1006 via a network 1008. For example, the communication resources 1030 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions 1050 may comprise software, a program, an application, an applet, an app, or other executable code for causing at least any of the processors 1010 to perform any one or more of the methodologies discussed herein. The instructions 1050 may reside, completely or partially, within at least one of the processors 1010 (e.g., within the processor's cache memory), the memory/storage devices 1020, or any suitable combination thereof. Furthermore, any portion of the instructions 1050 may be transferred to the hardware resources 1000 from any combination of the peripheral devices 1004 or the databases 1006. Accordingly, the memory of processors 1010, the memory/storage devices 1020, the peripheral devices 1004, and the databases 1006 are examples of computer-readable and machine-readable media.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell®, Microsoft®, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel®, AMD®, or other "off-the-shelf" microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described may be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc., that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

Reference throughout this specification to "an example" means that a particular feature, structure, or characteristic described in connection with the example is included in at least one embodiment. Thus, appearances of the phrase "in an example" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on its presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

Furthermore, the described features, structures, or characteristics may be combined in any suitable manner in one or more embodiments. In the following description, numerous specific details are provided, such as examples of materials, frequencies, sizes, lengths, widths, shapes, etc., to provide a thorough understanding of the embodiments. One skilled in the relevant art will recognize, however, that the embodiments may be practiced without one or more of the specific details, or with other methods, components, materials, etc. In other instances, well-known structures, materials, or operations are not shown or described in detail to avoid obscuring aspects of embodiments.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects /etc. are merely described in one or more embodiments for clarity, and it is recognized that the parameters/attributes/aspects /etc. can be combined with or substituted for parameters/attributes/etc. of another embodiment unless specifically disclaimed herein.

It will be understood by those having skill in the art that many changes may be made to the details of the above-described embodiments without departing from the scope of the present invention. The scope of the present invention should, therefore, be determined only by the following claims.

## Claims

1. An apparatus for a radio access network, RAN, node of a wireless system, the apparatus comprising:
a memory to store data corresponding to a plurality of transport network layer, TNL, associations between the RAN node and a core network, CN, of the wireless system; and
baseband circuitry,
the apparatus **characterized in that** the baseband circuitry is to:
for a user equipment, UE, in a connected mode with the CN, maintain a UE-specific association on an interface between the RAN and the CN, UE-specific RAN-CN association, corresponding to a first TNL association of the plurality of TNL associations;
determine, while the UE is in the connected mode, an update of the UE-specific RAN-CN association by a network function of the CN; and
in response to the update, change or release the UE-specific RAN-CN association.

2. The apparatus of claim 1, wherein to determine the update of the UE-specific RAN-CN association, the baseband circuitry is further configured to:
generate a message to communicate to the network function through the interface using the first TNL association; and
process a response to the message from the network function through the interface using a second TNL association.

3. The apparatus of claim 1, to determine the update of the UE-specific RAN-CN association, the baseband circuitry is further configured to:
generate a message to communicate to the network function through the interface using the first TNL association; and
process a response to the message from the network function through the interface using the first TNL association, wherein the response comprises an indication to resend the message through the interface using a second TNL association.

4. The apparatus of claim 3, wherein if a physical transport address corresponding to the second TNL association does not exist, the baseband circuitry is further configured to establish the second TNL association on the fly.

5. The apparatus of claim 1, wherein when the UE connects to the core network via the RAN node, the baseband circuitry is further configured to create the UE-specific RAN-CN association by selection of the first TNL association from a set of one or more designated TNL association of the plurality of TNL associations for an initial UE message through the interface.

6. The apparatus of claim 5, wherein the baseband circuitry is further configured to use the one or more designated TNL association to send the initial message via a load balancer function that selects the network function from a plurality of network functions.

7. The apparatus of any of claims 1-6, wherein the baseband circuitry is further configured to process a command, from the CN at any time, to release the UE-specific RAN-CN association for the UE in the connected mode.

8. The apparatus of claim 7, wherein the command is in a UE-specific RAN-CN association release message on a current TNL association.

9. The apparatus of claim 7, wherein the baseband circuitry is further configured to, subsequent to the release of the UE-specific RAN-CN association for the UE:
identify a new message to send through the interface to the CN for the UE;
create a new UE-specific RAN-CN association for the UE using a designated TNL association permitted for initial UE messages through the interface; and
generate the new message for the CN through the designated TNL association.

10. A machine readable storage medium including machine-readable instructions, when executed by one or more processors for a control plane network function in a core network of a wireless system, to:
generate a configuration message, for an access network, to indicate a set of designated transport network layer, TNL, associations available for reception of initial user equipment, UE, messages through an interface between the control plane network function and the access network;
process a first initial UE message received through the interface via a first designated TNL association of the set of designated TNL associations for a corresponding UE; and
provide an indication to the access network of whether to use the first designated TNL association or a different TNL association selected by the control plane network function as a current TNL association for subsequent messages for the corresponding UE.

11. The machine readable storage medium of claim 10, wherein the machine-readable instructions are further to, at any time, change the current TNL association to a new TNL association for the corresponding UE or release the current TNL association for the corresponding UE.

12. The machine readable storage medium of claim 11, wherein to change the current TNL association, the machine-readable instructions are further to generate a UE-specific message for the corresponding UE on the new TNL association that is different than the current TNL association.

13. The machine readable storage medium of claim 11, wherein to change the current TNL association, the machine-readable instructions are further to generate a UE-specific message on the current TNL association comprising information for the new TNL association that is different than the current TNL association.

14. The machine readable storage medium of any of claims 11-13, wherein the configuration message further indicates a set of non-designated TNL associations that are unavailable for reception of the initial UE messages and are available for subsequent UE related signaling through the interface, and wherein the machine-readable instructions are further to select the new TNL association from one of the set of designated TNL associations and the set of non-designated TNL associations.

15. The machine readable storage medium of claim 11, wherein to release the current TNL association for the corresponding UE the machine-readable instructions are further to:
generate a release message, on the current TNL association, for access network; and
maintain user plane connectivity for the corresponding UE.

## Patentansprüche

1. Vorrichtung für einen Funkzugangsnetzwerk-, RAN-, Knoten eines drahtlosen Systems, wobei die Vorrichtung umfasst:
einen Speicher zum Speichern von Daten, die einer Vielzahl von Transportnetzwerkschicht-, TNL-, Assoziationen zwischen dem RAN-Knoten und einem Kernnetzwerk, CN, des drahtlosen Systems entsprechen; und eine Basisbandschaltung,
wobei die Vorrichtung **dadurch gekennzeichnet ist, dass** die Basisbandschaltung:
für ein Benutzergerät, UE, in einem mit dem CN verbundenen Modus eine UE-spezifische Assoziation an einer Schnittstelle zwischen dem RAN und dem CN, UE-spezifische RAN-CN-Assoziation, die einer ersten TNL-Assoziation der Vielzahl von TNL-Assoziationen entspricht, aufrechterhalten soll;
während sich das UE im verbundenen Modus befindet, eine Aktualisierung der UE-spezifischen RAN-CN-Assoziation durch eine Netzwerkfunktion des CN bestimmen soll; und
als Reaktion auf die Aktualisierung, die UE-spezifische RAN-CN-Assoziation ändern oder freigeben soll.

2. Vorrichtung nach Anspruch 1, wobei zum Bestimmen der Aktualisierung der UE-spezifischen RAN-CN-Assoziation die Basisbandschaltung ferner konfiguriert ist zum:
Erzeugen einer Nachricht zum Kommunizieren mit der Netzwerkfunktion über die Schnittstelle unter Verwenden der ersten TNL-Assoziation; und
Verarbeiten einer Antwort auf die Nachricht von der Netzwerkfunktion über die Schnittstelle unter Verwenden einer zweiten TNL-Assoziation.

3. Vorrichtung nach Anspruch 1, wobei, um die Aktualisierung der UE-spezifischen RAN-CN-Assoziation zu bestimmen, die Basisbandschaltung ferner konfiguriert ist zum:
Erzeugen einer Nachricht zum Kommunizieren mit der Netzwerkfunktion über die Schnittstelle unter Verwenden der ersten TNL-Assoziation; und
Verarbeiten einer Antwort auf die Nachricht von der Netzwerkfunktion über die Schnittstelle unter Verwenden der ersten TNL-Assoziation, wobei die Antwort eine Anzeige zum erneuten Senden der Nachricht über die Schnittstelle unter Verwenden einer zweiten TNL-Assoziation umfasst.

4. Vorrichtung nach Anspruch 3, wobei, wenn eine physikalische Transportadresse, die der zweiten TNL-Assoziation entspricht, nicht existiert, die Basisbandschaltung ferner konfiguriert ist, um die zweite TNL-Assoziation on-the-fly einzurichten.

5. Vorrichtung nach Anspruch 1, wobei, wenn das UE sich über den RAN-Knoten mit dem Kernnetzwerk verbindet, die Basisbandschaltung ferner konfiguriert ist, um die UE-spezifische RAN-CN-Assoziation durch Auswahl der ersten TNL-Assoziation aus einem Satz von einer oder mehreren designierten TNL-Assoziationen der Vielzahl von TNL-Assoziationen für eine initiale UE-Nachricht über die Schnittstelle zu erzeugen.

6. Vorrichtung nach Anspruch 5, wobei die Basisbandschaltung ferner konfiguriert ist, um die eine oder mehreren designierten TNL-Assoziationen zu verwenden, um die initiale Nachricht über eine Lastausgleichsfunktion zu senden, die die Netzwerkfunktion aus einer Vielzahl von Netzwerkfunktionen auswählt.

7. Vorrichtung nach einem der Ansprüche 1-6, wobei die Basisbandschaltung ferner konfiguriert ist, um jederzeit einen Befehl vom CN zu verarbeiten, um die UE-spezifische RAN-CN-Assoziation für das UE im verbundenen Modus freizugeben.

8. Vorrichtung nach Anspruch 7, wobei der Befehl in einer UE-spezifischen RAN-CN-Assoziations-Freigabenachricht auf einer aktuellen TNL-Assoziation ist.

9. Vorrichtung nach Anspruch 7, wobei die Basisbandschaltung ferner konfiguriert ist, um, nach der Freigabe der UE-spezifischen RAN-CN-Assoziation für die UE:
eine neue Nachricht zu identifizieren, die über die Schnittstelle zum CN für das UE gesendet werden soll;
eine neue UE-spezifischen RAN-CN-Assoziation für das UE unter Verwenden einer designierten TNL-Assoziation zu erstellen, die für initiale UE-Nachrichten über die Schnittstelle zugelassen ist; und
die neue Nachricht für das CN über die designierte TNL-Assoziation zu erzeugen.

10. Maschinenlesbares Speichermedium, das maschinenlesbare Anweisungen beinhaltet, die, wenn sie von einem oder mehreren Prozessoren für eine Steuerebenen-Netzwerkfunktion in einem Kernnetzwerk eines drahtlosen Systems ausgeführt werden:
eine Konfigurationsnachricht für ein Zugriffsnetzwerk erzeugen sollen, um einen Satz von designierten Transportnetzwerkschichten-, TNL-, Assoziationen, die für den Empfang von initialen Benutzergerät-, UE-, Nachrichten über eine Schnittstelle zwischen der Steuerebenen-Netzwerkfunktion und dem Zugriffsnetzwerk verfügbar sind, anzuzeigen;
eine erste initiale UE-Nachricht verarbeiten sollen, die über die Schnittstelle über eine erste designierte TNL-Assoziation des Satzes von designierten TNL-Assoziationen für ein entsprechendes UE empfangen wird; und
für das Zugangsnetzwerk eine Anzeige bereitstellen soll, ob die erste designierte TNL-Assoziation oder eine andere TNL-Assoziation, die von der Steuerebenen-Netzwerkfunktion als aktuelle TNL-Assoziation für nachfolgende Nachrichten für das entsprechende UE ausgewählt wurde, verwendet werden soll.

11. Maschinenlesbares Speichermedium nach Anspruch 10, wobei die maschinenlesbaren Anweisungen ferner jederzeit die aktuelle TNL-Assoziation in eine neue TNL-Assoziation für das entsprechende UE ändern oder die aktuelle TNL-Assoziation für das entsprechende UE freigeben sollen.

12. Maschinenlesbares Speichermedium nach Anspruch 11, wobei zum Ändern der aktuellen TNL-Assoziation die maschinenlesbaren Anweisungen ferner eine UE-spezifische Nachricht für das entsprechende UE auf der neuen TNL-Assoziation erzeugen sollen, die sich von der aktuellen TNL-Assoziation unterscheidet.

13. Maschinenlesbares Speichermedium nach Anspruch 11, wobei zum Ändern der aktuellen TNL-Assoziation die maschinenlesbaren Anweisungen ferner eine UE-spezifische Nachricht auf der aktuellen TNL-Assoziation erzeugen sollen, die Informationen für die neue TNL-Assoziation umfasst, die sich von der aktuellen TNL-Assoziation unterscheidet.

14. Maschinenlesbares Speichermedium nach einem der Ansprüche 11-13, wobei die Konfigurationsnachricht ferner einen Satz an nicht designierten TNL-Assoziationen anzeigt, die für den Empfang der initialen UE-Nachrichten nicht verfügbar sind und für nachfolgende UE-bezogene Signalisierung über die Schnittstelle verfügbar sind, und wobei die maschinenlesbaren Anweisungen ferner die neue TNL-Assoziation aus dem Satz designierter TNL-Assoziationen und dem Satz nicht designierter TNL-Assoziationen auswählen sollen.

15. Maschinenlesbares Speichermedium nach Anspruch 11, wobei zum Freigeben der aktuellen TNL-Assoziation für das entsprechende UE die maschinenlesbaren Anweisungen ferner: eine Freigabenachricht auf der aktuellen TNL-Assoziation für ein Zugriffsnetzwerk erzeugen sollen; und die Benutzerebenen-Konnektivität für das entsprechende UE aufrechterhalten sollen.

## Revendications

1. Un appareil pour un nœud de réseau d'accès radio, RAN, d'un système sans fil, l'appareil comprenant :
une mémoire pour stocker des données correspondant à une pluralité d'associations de couche de réseau de transport, TNL, entre le nœud RAN et un réseau cœur, CN, du système sans fil ; et
un ensemble de circuits en bande de base,
l'appareil étant **caractérisé en ce que** l'ensemble de circuits en bande de base doit :
pour un équipement utilisateur, UE, dans un mode connecté avec le CN, maintenir une association spécifique à l'UE sur une interface entre le RAN et le CN, association RAN-CN spécifique à l'UE, correspondant à une première association TNL de la pluralité d'associations TNL ;
déterminer, pendant que l'UE est dans le mode connecté, une mise à jour de l'association RAN-CN spécifique à l'UE par une fonction réseau du CN ; et
en réponse à la mise à jour, changer ou libérer l'association RAN-CN spécifique à l'UE.

2. L'appareil selon la revendication 1, dans lequel pour déterminer la mise à jour de l'association RAN-CN spécifique à l'UE, l'ensemble de circuits en bande de base est en outre configuré pour :
générer un message à communiquer à la fonction réseau par l'intermédiaire de l'interface en utilisant la première association TNL ; et
traiter une réponse au message en provenance de la fonction réseau par l'intermédiaire de l'interface en utilisant une seconde association TNL.

3. L'appareil selon la revendication 1, pour déterminer la mise à jour de l'association RAN-CN spécifique à l'UE, l'ensemble de circuits en bande de base est en outre configuré pour :
générer un message à communiquer à la fonction réseau par l'intermédiaire de l'interface en utilisant une première association TNL ; et
traiter une réponse au message en provenance de la fonction réseau par l'intermédiaire de l'interface en utilisant la première association TNL, dans lequel la réponse comprend une indication de renvoyer le message par l'intermédiaire de l'interface en utilisant une seconde association TNL.

4. L'appareil selon la revendication 3, dans lequel si une adresse de transport physique correspondant à la seconde association TNL n'existe pas, l'ensemble de circuits en bande de base est en outre configuré pour établir la seconde association TNL à la volée.

5. L'appareil selon la revendication 1, dans lequel lorsque l'UE se connecte au réseau cœur via le nœud RAN, l'ensemble de circuits en bande de base est en outre configuré pour créer l'association RAN-CN spécifique à l'UE par sélection de la première association TNL parmi un ensemble d'une ou plusieurs association TNL désignées de la pluralité d'associations TNL pour un message UE initial par l'intermédiaire de l'interface.

6. L'appareil selon la revendication 5, dans lequel l'ensemble de circuits en bande de base est en outre configuré pour utiliser les une ou plusieurs associations TNL désignées pour envoyer le message initial via une fonction d'équilibreur de charge qui sélectionne la fonction réseau parmi une pluralité de fonctions réseau.

7. L'appareil selon l'une quelconque des revendications 1 à 6, dans lequel l'ensemble de circuits en bande de base est en outre configuré pour traiter une commande, en provenance du CN à tout moment, pour libérer l'association RAN-CN spécifique à l'UE pour l'UE dans le mode connecté.

8. L'appareil selon la revendication 7, dans lequel la commande se trouve dans un message de libération d'association RAN-CN spécifique à l'UE sur une association TNL courante.

9. L'appareil selon la revendication 7, dans lequel l'ensemble de circuits en bande de base est en outre configuré pour, à la suite de la libération de l'association RAN-CN spécifique à l'UE pour l'UE :
identifier un nouveau message à envoyer par l'intermédiaire de l'interface au CN pour l'UE ;
créer une nouvelle association RAN-CN spécifique à l'UE pour l'UE en utilisant une association TNL désignée permise pour des messages UE initiaux par l'intermédiaire de l'interface ; et
générer le nouveau message pour le CN par l'intermédiaire de l'association TNL désignée.

10. Un support de stockage lisible par machine incluant des instructions lisibles par machine, lorsqu'elles sont exécutées par un ou plusieurs processeurs pour une fonction de réseau de plan de contrôle dans un réseau cœur d'un système sans fil, pour :
générer un message de configuration, pour un réseau d'accès, pour indiquer un ensemble d'associations de couche de réseau de transport, TNL, désignées disponible pour la réception de messages d'équipement utilisateur, UE, initiaux par l'intermédiaire d'une interface entre la fonction réseau de plan de contrôle et le réseau d'accès ;
traiter un premier message UE initial reçu par l'intermédiaire de l'interface via une première association TNL désignée de l'ensemble d'associations TNL désignées pour un UE correspondant ; et
fournir une indication au réseau d'accès de s'il faut utiliser la première association TNL désignée ou une association TNL différente sélectionnée par la fonction réseau de plan de contrôle en tant qu'association TNL courante pour des messages subséquents pour l'UE correspondant.

11. Le support de stockage lisible par machine selon la revendication 10, dans lequel les instructions lisibles par machine doivent en outre, à tout moment, changer l'association TNL courante en une nouvelle association TNL pour l'UE correspondant ou libérer l'association TNL courante pour l'UE correspondant.

12. Le support de stockage lisible par machine selon la revendication 11, dans lequel pour changer l'association TNL courante, les instructions lisibles par machine doivent en outre générer un message spécifique à l'UE pour l'UE correspondant sur la nouvelle association TNL qui est différente de l'association TNL courante.

13. Le support de stockage lisible par machine selon la revendication 11, dans lequel pour changer l'association TNL courante, les instructions lisibles par machine doivent en outre générer un message spécifique à l'UE sur l'association TNL courante comprenant une information pour la nouvelle association TNL qui est différente de l'association TNL courante.

14. Le support de stockage lisible par machine selon l'une quelconque des revendications 11 à 13, dans lequel le message de configuration indique en outre un ensemble d'associations TNL non désignées qui sont indisponibles pour la réception des messages UE initiaux et qui sont disponibles pour une signalisation liée à l'UE subséquente par l'intermédiaire de l'interface, et dans lesquelles les instructions lisibles par machine doivent en outre sélectionner la nouvelle association TNL parmi l'un de l'ensemble d'associations TNL désignées et de l'ensemble d'associations TNL non désignées.

15. Le support de stockage lisible par machine selon la revendication 11, dans lequel pour libérer l'association TNL courante pour l'UE correspondant, les instructions lisibles par machine doivent en outre :
générer un message de libération, sur l'association TNL courante, pour un réseau d'accès ; et
maintenir une connectivité de plan utilisateur pour l'UE correspondant.
